# EUROPEAN PATENT APPLICATION

(11) **EP 1 717 756 A1**
(43) Date of publication of application: **02.11.2006**
(21) Application number: 06008878.8
(22) Date of filing: 28.04.2006
(51) Int. Cl.: G06T 11/60

(54) **Method and system for changing image state in wireless terminal**

(30) Priority: 28.04.2005 KR 20050035676
(71) Applicant: Samsung Electronics Co., Ltd., Suwon-si, Gyeonggi-Do (KR)
(72) Inventor: Nam, Seung-A, Yeongtong-gu Suwon-si Gyeonggi-do (KR); Lee, Un-Kyong, Yeongtong-gu Suwon-si Gyeonggi-do (KR); Won, Ji-Hyun, Yeongtong-gu Suwon-si Gyeonggi-do (KR)
(74) Representative: Lang, Johannes

(57) **Abstract**

A system and method are provided for changing an image state in a wireless terminal. The system and method easily and efficiently changes a current image state of a wireless terminal to any number of previous image states, and includes the steps of storing an image state in each stage with a predetennined identifier whenever an image effect is applied to an image, displaying the image state of each stage with the predetermined identifier if editing according to image stages is selected, and displaying an image state corresponding to a predetermined identifier if the predetermined identifier is selected.

## Description

### BACKGROUND OF THE INVENTION

### Field of the Invention:

The present invention relates to a method for changing image states. More particularly, the present invention relates to a method for changing a current image state of a wireless terminal to a previous image state in a simple manner.

### Description of the Related Art:

Recently, wireless terminals have been developed to comprise structures that are capable of performing high-speed data communication as well as voice communication. The wireless terminals performing such data communication can typically process both packet data and image data.

Recently, wireless terminals have further provided a function of transmitting/receiving image data. Accordingly, such wireless terminals can perform a function of storing an image received from a base station or a function of transmitting an obtained image to the base station. In addition, such wireless terminals may comprise a camera for photographing an image and a display module for displaying an image signal photographed by the camera. Herein, the camera may comprise a charged-couple device (CCD) sensor or a complementary metal-oxide semiconductor (CMOS) sensor, and the display module may comprise a liquid crystal display (LCD). As the size of camera equipment becomes miniaturized, devices for photographing images have also been gradually miniaturized. Accordingly, when such cameras are implemented therein, the wireless terminal can display a moving picture or a still picture by photographing the image, and can transmit the photographed image to a base station.

As the demands of service providers and consumers for video mail increase, video mail services have been realized and such video mail services are expected to greatly increase in the future. In addition, functions of editing images through manipulation of the user in the wireless terminal have also been greatly increased. For example, techniques of controlling the size of the stored pictures ("zoom in" and "zoom out") and synthesizing plural pictures have been realized in wireless terminals. In addition, where it is possible to re-edit the image data with a variety of image effects, users may be provided with various services to do so.

Generally, the user employs an "undo" function when it is necessary to cancel inserted image effects in the process of re-editing the image data. However, the "undo" function changes the current image state to only the previous image state whenever a functional key corresponding to the "undo" function is selected. Accordingly, the user must input the key several times in order to change the current image state to an image state required by the user.

Accordingly, a need exists for a system and method to easily and efficiently change a current image state of a wireless terminal to any number of previous image states.

### SUMMARY OF THE INVENTION

Accordingly, embodiments of the present invention have been developed to substantially solve the above-mentioned and other problems occurring in the prior art. An object of embodiments of the present invention is to provide a system and method for changing an image state in a wireless terminal, which can easily and efficiently change to any number of previous image states in a wireless terminal..

To accomplish the above and other objects, a method is provided for changing image states of a wireless terminal, the method comprising the steps of storing an image state in each stage with a predetermined identifier whenever an image effect is applied to an image, displaying the image state of each stage with the predetermined identifier if editing according to image stages is selected, and displaying an image state corresponding to a predetermined identifier if the predetermined identifier is selected.

According to another aspect of embodiments of the present invention, a method is provided for changing image states of a wireless terminal, the method comprising the steps of displaying a predetermined identifier and an image state corresponding to the predetermined identifier according to stages of applying image effects to images if editing according to image stages is selected, and displaying an image state of a stored original image and a stored image effect by synthesizing the stored original image with the corresponding image effect in a stage corresponding to a predetermined identifier if the predetermined identifier is selected.

According to another aspect of embodiments of the present invention, a system is provided for changing image states of a wireless terminal, the system comprising a controller, a memory coupled with the controller for storing an image state in each stage with a predetermined identifier whenever an image effect is applied to an image, and a display coupled with the controller for displaying the image state of each stage with the predetermined identifier if editing according to image stages is selected and for displaying an image state corresponding to a predetermined identifier if the predetermined identifier is selected.

### BRIEF DESCRIPTION OF THE DRAWINGS

The above and other objects, features and advantages of embodiments of the present invention will become more apparent from the following detailed description taken in conjunction with the accompanying drawings, in which:
FIG. 1 is a block diagram illustrating the structure of an exemplary wireless terminal according to an embodiment of the present invention;
FIG. 2 is a flowchart illustrating an exemplary method for changing image states according to stages in a wireless terminal according to an embodiment of the present invention; and
FIGS. 3A through 3E are exemplary views for illustrating the method of FIG. 2.

Throughout the drawings, like reference numerals will be understood to refer to like parts, components and structures.

### DETAILED DESCRIPTION OF THE EXEMPLARY EMBODIMENTS

Hereinafter, exemplary embodiments of the present invention will be described in detail with reference to the accompanying drawings. The same or similar components in the drawings are designated by the same reference numerals as far as possible although shown in different drawings. In the following description, a detailed description of known functions and configurations incorporated herein is omitted for clarity and conciseness.

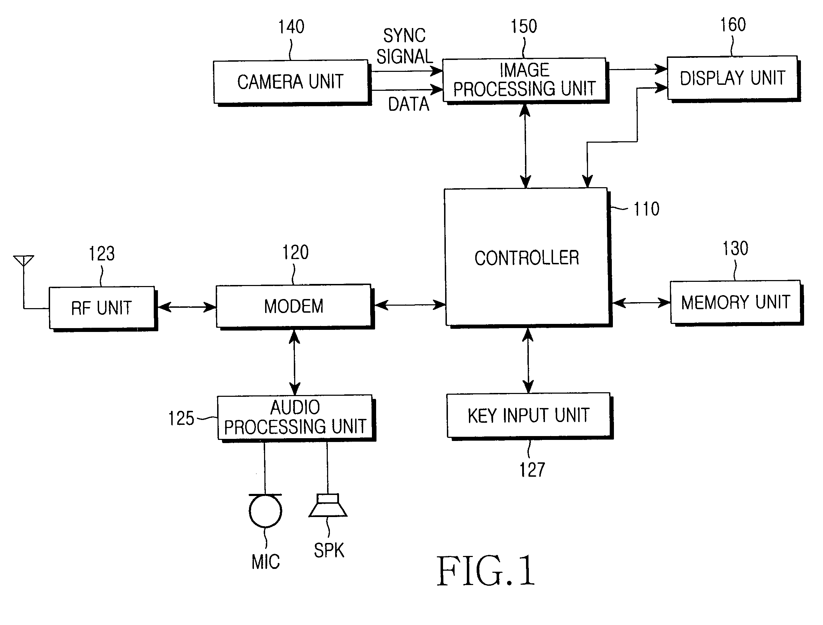

FIG. 1 is a block diagram illustrating the structure of an exemplary wireless terminal according to an embodiment of the present invention, and more particularly, illustrating the structure of the wireless terminal including a camera. The wireless terminal comprises a controller 110, a modem 120, a radio frequency (RF) unit 123, an audio processing unit 125, a key input unit 127, a memory unit 130, a camera unit 140, an image processing unit 150, and a display unit 160, but is not limited thereto. The wireless terminal can further comprise at least one of a microphone MIC and speaker SPK.

The RF module or unit 123 performs wireless communication functions of the wireless terminal. The RF module 123 comprises an RF transmitter for up-converting and amplifying a frequency of a transmitted signal and an RF receiver for low noise amplifying a received signal and for down-converting a frequency of the received signal. The modem 120 comprises a transmitter for encoding and modulating the transmitted signal and a receiver for decoding and demodulating the received signal. The audio processing module or unit 125 may comprise a CODEC, and the CODEC may comprise a data CODEC for processing packet data and an audio CODEC for processing an audio signal such as voice, and so forth. The audio processing module 125 reproduces a digital audio signal received from the modem 120 by converting the digital audio signal into an analog signal through the audio CODEC. In addition, the audio processing module 125 transmits an analog audio signal to be transmitted, which is generated from the microphone MIC, to the modem 120 by converting the analog audio signal into a digital audio signal through the audio CODEC. The CODEC may be provided separately or included in the controller 110.

The memory module or unit 130 comprises a program memory and data memories. The program memory may store programs for controlling a typical operation of the wireless terminal and programs controlling changes to a selected image state according to an embodiment of the present invention. In addition, the data memories may temporarily store data generated during the execution of the programs. In addition, the memory module 130 stores an image state in each stage employing an image effect according to an embodiment of the present invention.

The memory module 130 further comprises a predetermined identifier that is capable of identifying an image state in each stage, and the predetermined identifier may be stored in a random access memory (RAM) which is a volatile memory. In addition, the memory module 130 may store the image by separating an original image from the image effect applied to the original image or synthesizing the original image with the image effect according to an embodiment of the present invention. In addition, the memory module 130 may store an image state in each stage as a thumbnail according to an embodiment of the present invention. The predetermined identifier may be provided and illustrated as any one of numerals, the alphabet, the Korean alphabet, and special characters, but is not limited thereto. In addition, the predetermined identifier may be provided and illustrated as a character string based on numerals, the alphabet, the Korean alphabet, and special characters.

The controller 110 preferably controls the entire operation of the wireless terminal. In addition, the controller 110 may include the modem 120 and the CODEC. The controller 110 may control an image state to be stored with a predetermined identifier in each stage employing an image effect according to an embodiment of the present invention. In addition, the controller 110 controls image states identified by predetermined identifiers to be displayed depending on stages, and allows changes to an image state corresponding to a selected predetermined identifier in a procedure of editing images depending on stages according to an embodiment of the present invention.

The camera module or unit 140 comprises a camera sensor for photographing image data and converting a photographed optical signal into an electrical signal, and a signal processing module for converting an analog image signal photographed by the camera sensor into digital data. Where, for example, the camera sensor is a charge-coupled device (CCD) sensor, the signal processing module may be realized using a digital signal processor (DSP). In addition, the camera sensor may be integrated with, or separated from the signal processing module.

The image processing module or unit 150 generates screen image data used for displaying an image signal output from the camera module 140. The image processing module 150 processes the image signal output from the camera module 140 in a frame unit, and outputs the frame image data corresponding to the characteristics and size of the display module or unit 160. In addition, the image processing module 150 comprises an image CODEC to compress a frame image data displayed on the display module 160 through a preset scheme, or to de-compress the compressed image data into an original frame image data. Herein, the image CODEC may comprise a JPEG CODEC, an MPEG4 CODEC, and a Wavelet CODEC. It is assumed, for example, that the image processing module 150 includes an "on screen display" function, and the image processing module 180 may output the "on screen display" data according to the size of the displayed screen image under the control of the controller 110.

The display module 160 displays an image signal output from the image processing module 150 and user data output from the controller 110 on a screen. Herein, the display module 160 may employ a liquid crystal display (LCD). In this case, the display module 160 may comprise an LCD controller, a memory capable of storing image data, and an LCD display element. Herein, when the LCD is realized through a touch screen scheme, the LCD may also operate as an input module.

The display module 160 may display an image including an image effect according to an embodiment of the present invention. The display module 160 displays an image state in each stage with a predetermined identifier according to an embodiment of the present invention. The image state may be displayed, for example, as a thumbnail. The key input module or unit 127 comprises keys used for inputting numeral and character information, and functional keys used for setting a variety of functions. The key input module 127 may have a functional key corresponding to a predetermined identifier such that the functional key allows changes to an image state in each stage according to an embodiment of the present invention.

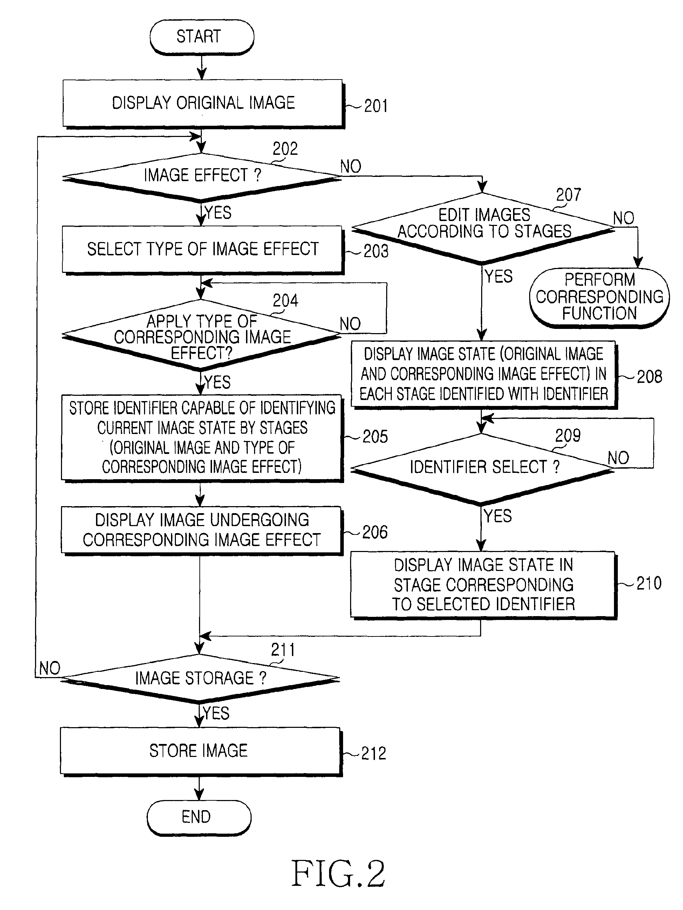

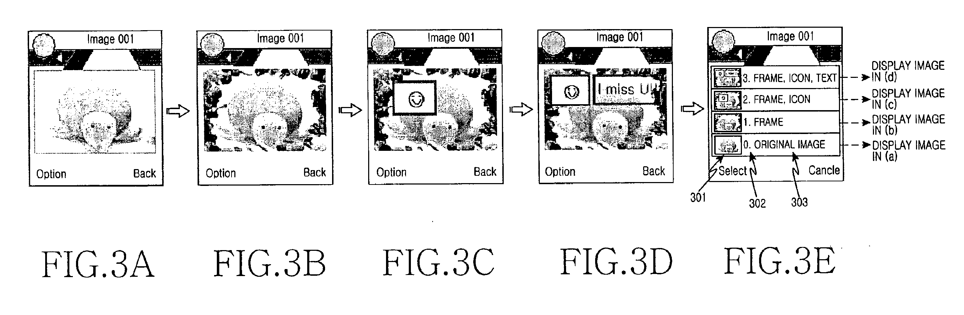

Hereinafter, an exemplary operational procedure of changing image states in the wireless terminal described above will be described with reference to FIGs. 2 and 3A to 3E. Although the operational procedure will be described on the assumption, for example, that the types of image effects include frames, icons, and texts according to an embodiment of the present invention, a variety of image effects as well as the above-described image effects may be added and employed according to the setting of a user.

FIG. 2 is a flowchart of changing images states depending on stages in the wireless terminal according to an embodiment of the present invention, and FIGs. 3A to 3E are exemplary views for illustrating the steps of FIG. 2.

Hereinafter, an exemplary operational procedure of changing image states will be described with reference to the exemplary wireless terminal of FIG. 1.

Referring to FIG. 2, if a user of the wireless terminal inputs a selection key for image effects in step 201 while an original image is displayed, the controller 110 detects the input of the selection key and types of image effects in step 202. If the user selects one of the displayed image effects in step 203 and then applies the selected image effect to an original image, the controller 110 detects the application of the selected image effect to the original image in step 204, and stores a current image state in step 205. In this case, the controller 110 controls the original image to be stored as an image state having a predetermined identifier.

The controller 110 provides a predetermined identifier that is capable of identifying a current image state, that is, the original image and the type of corresponding image effect, which is applied to the original image, in each stage and controls the memory module 130 to store the predetermined identifier in a RAM of the memory module 130 in step 205. According to an embodiment of the present invention, the original image and the type of the image effect may be identified and stored with at least one predetermined identifier. If the current image state is stored in the memory 130, the controller 110 displays an image having undergone the image effect on the display module 160 in step 206. Whenever an image effect is applied by repeating steps 202 to 206, the controller 110 performs a control operation in such a manner that corresponding image states having predetermined identifiers distinguished according to stages are stored.

If the user selects to edit the images according to stages while the steps are being performed, the controller 110 detects the selection of the user in step 207 and displays image states according to stages identified by predetermined identifiers on the display module 160.

In step 208, the controller 110 performs a control operation in such a manner that the image states according to stages obtained through steps 202 to 206 are displayed, and controls the display module 160 to display image states according to stages, wherein the predetermined identifiers allow a shortcut function for both the stages of the image states and the image states, and image state information regarding the images and the types of the image effects applied to the images.

If a predetermined identifier is selected from among the displayed identifiers in step 208, the controller 110 detects the selection of the predetermined identifier in step 209 and displays an image state in a stage corresponding to the selected predetermined identifier in step 210. In this case, the controller 110 performs a control operation in such a manner that an original image and a corresponding image effect, which are discretely stored in the RAM of the memory 130 and have the selected predetermined identifier, are synthesized and displayed.

The controller 110 may perform a control operation in such a manner that a corresponding image state selected by the user is directly changed and displayed by repeating steps 202 to 210.

If the user selects the storage for a desired image state through the steps, the controller 110 detects the selection of the user in step 211 and stores the image state in step 212.

Hereinafter, the exemplary operational procedure shown in FIG. 2 will be described with reference to FIGs. 3A to 3E. An original image as shown in FIG. 3A is displayed in step 201. In this state, if, for example, the user selects a frame from among image effects and the type of frame, and then applies the frame to the original image in steps 202 and 203, the controller 110 detects it in step 204 and discretely stores the original image and the type of image effect, that is, the type of frame as an image state having a predetermined identifier of "1" in step 205. In this case, the original image is stored as an image state having a predetermined identifier of "0". If the image state corresponding to the identifier of "1" is stored, the controller 110 detects the storage and displays an image having undergone the type of corresponding frame effect on the display module 160 as shown in FIG. 3B in step 206.

If the user, for example, then selects an icon from among types of image effects and the type of corresponding icon effect, and then applies the type of corresponding icon effect to the original image in steps 202 and 203, the controller 110 detects it in step 204 and discretely stores the original image and the type of corresponding image effect, that is, the type of the frame and icon effect as an image state having a predetermined identifier of "2" in step 205. If the image state corresponding to the identifier of "2" is stored, the controller 110 detects the storage and displays an image having undergone the type of corresponding icon effect on the display module 160 as shown in FIG. 3C in step 206.

If, for example, the user then selects a text effect from among types of image effects, inputs the type of corresponding text effect, and then applies the type of corresponding text effect to the original image in steps 202 and 203 when an original image shown in FIG. 3C is displayed, the controller 110 detects it in step 204 and discretely stores the original image and the type of the corresponding image effect, that is, the type of frame, icon, and text effect as an image state having a predetermined identifier of "3 in step 205. If the image state corresponding to the identifier of "3" is stored, the controller 110 detects the storage and displays an image having undergone the type of corresponding text effect on the display module 160 as shown in FIG. 3D in step 206.

If the user selects image editing according to stages in the image state shown in FIG. 3D, the controller 110 detects the selection of the user in step 207 and performs step 208 so as to display image states of FIGs. 3A to 3D according to stages as shown in FIG. 3E. The controller 110 displays image states of FIGs. 3A to 3D as thumbnails 301 and displays predetermined numeral identifiers 302 of "0" to "3", corresponding to the image states 301 and information 303 regarding the corresponding image states in step 208.

If the user selects the identifier of "3" in the image state shown in FIG. 3E, the controller 110 detects the selection of the user in step 209 and performs step 210 so as to display an image state shown in FIG. 3D by synthesizing an original image and corresponding image effects, that is, frame, icon, and text effects stored with the identifier of "3".

If the user selects the identifier of "2", the controller 110 detects the selection of the user in step 209 and performs step 210 so as to display an image state shown in FIG. 3C by synthesizing an original image and corresponding image effects, that is, frame and icon effects stored with the identifier of "2".

If the user selects the identifier of "1", the controller 110 detects the selection of the user in step 209 and performs step 210 so as to display an image state shown in FIG. 3B by synthesizing an original image and a corresponding image effect, that is, a frame effect stored with the identifier of "1".

In addition, if the user selects the identifier of "0", the controller 110 detects the selection of the user in step 209 and performs step 210 so as to display an original image stored with the identifier of "0" as shown in FIG. 3A.

As described above, according to embodiments of the present invention, a system and method are provided for changing image states in a wireless terminal such that it is possible to easily and efficiently switch to any number of previous image states desired by a user when a variety of image effects are inserted into an image.

While the present invention has been shown and described with reference to certain exemplary embodiments thereof, it will be understood by those skilled in the art that various changes in form and details may be made therein without departing from the spirit and scope of the invention. Consequently, the scope of the invention should not be limited to the embodiments, but should be defined by the appended claims and equivalents thereof.

## Claims

1. A method for changing image states of a wireless terminal, the method comprising the steps of:
storing an image state in each stage with a predetermined identifier whenever an image effect is applied to an image;
displaying the image state of each stage with the predetermined identifier if editing according to image stages is selected; and
displaying an image state corresponding to a predetermined identifier if the predetermined identifier is selected.

2. The method as claimed in claim 1, further comprising the steps of:
dividing the image state stored in each stage with the predetermined identifier into an original image and a corresponding image effect; and
storing the divided image state in a volatile memory.

3. The method as claimed in claim 1, wherein the image state stored in each stage with the predetermined identifier is stored in a volatile memory by synthesizing an original image with a corresponding image effect.

4. The method as claimed in claim 1, wherein the predetermined identifier may comprise at least one of numerals, alphabets, Korean alphabets, and special characters.

5. The method as claimed in claim 4, wherein the predetermined identifier may comprise a character string based on at least one of the numerals, the alphabet, the Korean alphabet, and the special characters.

6. The method as claimed in claim 1, wherein at least one of the image state, the predetermined identifier, and image state information are displayed according to stages of image effects if editing for each image stage is selected.

7. The method as claimed in claim 1, further comprising the step of:
wherein, if the predetermined identifier is selected, displaying an image state obtained by synthesizing an original image and an image effect, which are stored, in a stage corresponding to the selected predetermined identifier.

8. The method as claimed in claim 1, further comprising the step of:
wherein, if the predetermined identifier is selected, displaying an image state of an original image and an image effect, which are synthesized with each other and stored, in a stage corresponding to the selected predetermined identifier.

9. The method as claimed in claim 1, wherein the image state is displayed as a thumbnail.

10. A method for changing image states of a wireless terminal, the method comprising the steps of:
displaying a predetermined identifier and an image state corresponding to the predetermined identifier according to stages of applying image effects to images if editing according to image stages is selected; and
displaying an image state of a stored original image and a stored image effect by synthesizing the stored original image with the corresponding image effect, in a stage corresponding to a predetermined identifier if the predetermined identifier is selected.

11. The method as claimed in claim 10, further comprising the step of:
wherein, if the predetermined identifier is selected, displaying an image state of an original image and an image effect, which are synthesized with each other and stored, in a stage corresponding to the selected predetermined identifier.

12. The method as claimed in claim 10, further comprising the steps of:
wherein, when the predetermined identifier is employed as a numeral, displaying the numeral and an image state corresponding to the numeral as a thumbnail in each stage of applying an image effect to an image if editing according to image stages is selected; and
displaying a corresponding image state of a stored original image and a stored image effect by synthesizing the stored original image with the corresponding image effect, in a stage corresponding to the selected numeral if the numeral is selected.

13. The method as claimed in claim 12, further comprising the step of:
wherein, if the predetermined number is selected, displaying an image state of an original image and an image effect, which are synthesized with each other and stored, in a stage corresponding to the selected numeral.

14. The method as claimed in claim 10, further comprising the steps of:
displaying an image;
selecting a type of an image effect and applying the type of image effect to the image;
storing a current image state with a predetermined identifier allowing identification of the current state in each stage if the image effect is applied to the image;
displaying an image which undergoes the image effect; and
displaying an image effect on the image.

15. The method as claimed in claim 14, further comprising the steps of:
dividing the image state stored in each stage with the predetermined identifier into an original image and a corresponding image effect; and
storing the divided image in a volatile memory.

16. The method as claimed in claim 14, wherein the image state stored in each stage with the predetermined identifier is stored in a volatile memory by synthesizing an original image with a corresponding image effect.

17. A system for changing image states of a wireless terminal, the system comprising:
a controller;
a memory coupled with the controller for storing an image state in each stage with a predetermined identifier whenever an image effect is applied to an image; and
a display coupled with the controller for displaying the image state of each stage with the predetermined identifier if editing according to image stages is selected and displaying an image state corresponding to a predetermined identifier if the predetermined identifier is selected.

18. The system as claimed in claim 17, wherein the controller is configured to:
divide the image state stored in each stage with the predetermined identifier into an original image and a corresponding image effect; and
store the divided image state in the memory.

19. The system as claimed in claim 17, wherein the controller is configured to:
determine if the predetermined identifier is selected and if selected, display an image state obtained by synthesizing an original image and an image effect, which are stored, in a stage corresponding to the selected predetermined identifier.

20. The system as claimed in claim 17, wherein the controller is configured to:
determine if the predetermined identifier is selected and if selected, display an image state of an original image and an image effect, which are synthesized with each other and stored, in a stage corresponding to the selected predetermined identifier.
